# EUROPEAN PATENT APPLICATION

(11) **EP 4 235 426 A1**
(43) Date of publication of application: **30.08.2023**
(21) Application number: 22766105.5
(22) Date of filing: 28.01.2022
(51) Int. Cl.: G06F 9/50

(54) **METHOD AND SYSTEM FOR MULTIPLE SERVICES TO SHARE SAME GPU, AND DEVICE AND MEDIUM**

(30) Priority: 12.03.2021 CN 202110271407
(71) Applicant: Shandong Yingxin Computer Technologies Co., Ltd., Jinan, Shandong 250001 (CN)
(72) Inventor: ZHANG, Rongguo, Jinan, Shandong 250001 (CN)
(74) Representative: Viering, Jentschura & Partner mbB Patent- und Rechtsanwälte
(86) International application number: PCT/CN2022/074621
(87) International publication number: WO 2022/188578

(57) **Abstract**

A method and system for sharing a same GPU by a plurality of services, a device and a storage medium are provided. The method includes: in response to receiving a request of creating GPU services, creating the corresponding GPU services according to the request, creating GPU Pods of a corresponding quantity according to the GPU services, and associating the GPU services with the GPU Pods (S1); creating Kubernetes Pods according to a configuration of the GPU Pods, associating the Kubernetes Pods with the GPU Pods (S2); in response to receiving a calculating request, according to the calculating request, determining a specification of a GPU graphic memory or GPU time slice required to be applied for, and comparing with a threshold specified by the GPU services (S3); in response to the specification of the GPU graphic memory or time slice being less than the threshold, reading current residual resource amounts of the GPU Pods and the Kubernetes Pods, and comparing with the specification of the GPU graphic memory or time slice (S4); and in response to the specification of the GPU graphic memory or time slice being less than a sum of the current residual resource amounts of the GPU Pods and the Kubernetes Pods, according to a current resource utilization rate, dispatching the GPU Pods and the Kubernetes Pods for calculation (S5).

## Description

The present application claims the priority of the Chinese patent application filed on March 12th, 2021 before the China National Intellectual Property Administration with the application number of 202110271407.8 and the title of "METHOD AND SYSTEM FOR MULTIPLE SERVICES TO SHARE SAME GPU, AND DEVICE AND MEDIUM", which is incorporated herein in its entirety by reference.

### FIELD

The present application relates to the technical field of deep learning, and particularly relates to a method and system for sharing a same GPU by a plurality of services, a computer device and a readable medium.

### BACKGROUND

It has been very popular to provide computing power by using Graphics Processing Units (GPUs) in machine learning and deep learning. A typical scene is, in a data center, based on Kubernetes (an open-source container arranging engine, used for automated deployment, scaling and management of containerized applications) as the container arranging environment, constructing a cloud-environment cluster to deploy the services of the machine learning and the deep learning. The nodes (servers) in the cluster are divided into different types, where the nodes equipped with a GPU are referred to as GPU nodes, and the other nodes are CPU nodes. The GPU nodes serve for the particular tasks of the machine learning and the deep learning. The CPU nodes serve for cluster management, service dispatching and so on. However, because the resources provided by a single GPU such as the graphic memories, the registers and the threads are very abundant, usually one Kubernetes Pod (the smallest unit of Kubernetes) cannot completely utilize the resources of the single GPU such as the graphic memories, the registers and the threads. Therefore, a technique is required to realize dispatching a plurality of Pods of a plurality of services to the same GPU, thereby realizing a high GPU utilization ratio.

### SUMMARY

In view of the above, an object of the embodiments of the present application is to provide a method and system for sharing a same GPU by a plurality of services, a computer device and a computer-readable storage medium. The present application uses the functions of Kubernetes such as customized resource and customized annotation to realize the registration and dispatching of virtual services, and realizes restriction on the application for the GPU graphic memory and the controlling on the occupation of the GPU time slice by means of CUDA hijack, thereby reasonably allocating the resource according to the calculating requests.

In order to achieve the above object, an aspect of the embodiments of the present application provides a method for sharing a same GPU by a plurality of services, and the method includes:
in response to receiving a request of creating GPU services, creating the corresponding GPU services according to the request, creating GPU Pods of a corresponding quantity according to the GPU services, and associating the GPU services with the GPU Pods;
creating Kubernetes Pods according to a configuration of the GPU Pods, and associating the Kubernetes Pods with the GPU Pods;
in response to receiving a calculating request, according to the calculating request, determining a specification of a GPU graphic memory or GPU time slice required to be applied for, and comparing with a threshold specified by the GPU services;
in response to the specification of the GPU graphic memory or GPU time slice being less than the threshold specified by the GPU services, reading current residual resource amounts of the GPU Pods and the Kubernetes Pods, and comparing with the specification of the GPU graphic memory or GPU time slice; and
in response to the specification of the GPU graphic memory or GPU time slice being less than a sum of the current residual resource amounts of the GPU Pods and the Kubernetes Pods, according to a current resource utilization rate, dispatching the GPU Pods and the Kubernetes Pods for calculation.

In some embodiments, the method further includes:
in response to the specification of the GPU graphic memory or GPU time slice being not less than the threshold specified by the GPU services, according to the specification of the GPU graphic memory or GPU time slice, generating a new request of creating GPU services.

In some embodiments, the method further includes:
in response to the specification of the GPU graphic memory or GPU time slice being not less than the sum of the current residual resource amounts of the GPU Pods and the Kubernetes Pods, increasing a failure time quantity by one, and, every predetermined duration, determining again whether the specification of the GPU graphic memory or GPU time slice is less than the sum of the current residual resource amounts of the GPU Pods and the Kubernetes Pods.

In some embodiments, the method further includes:
determining whether the failure time quantity reaches a second threshold, and in response to the failure time quantity reaching the second threshold, increasing a magnitude of the predetermined duration.

In some embodiments, according to the current resource utilization rate, dispatching the GPU Pods and the Kubernetes Pods for calculation includes:
allocating calculation tasks to each of the GPU Pods and the Kubernetes Pods, so that resource utilization rates of the GPU Pods and the Kubernetes Pods are equal in calculation.

In some embodiments, according to the current resource utilization rate, dispatching the GPU Pods and the Kubernetes Pods for calculation includes:
sorting the GPU Pods from a highest computing power to a lowest computing power, and allocating calculation tasks to the GPU Pods in order, to, after a resource utilization rate of a current GPU Pod reaches a third threshold, allocate remaining calculation tasks to a next one GPU Pod.

In some embodiments, according to the current resource utilization rate, dispatching the GPU Pods and the Kubernetes Pods for calculation includes:
sorting the GPU Pods from a lowest current resource utilization rate to a highest current resource utilization rate, and allocating calculation tasks to the GPU Pods in order, to, after a resource utilization rate of a current GPU Pod reaches a third threshold, allocate remaining calculation tasks to a next one GPU Pod.

Another aspect of the embodiments of the present application provides a system for sharing a same GPU by a plurality of services, wherein the system includes:
a first associating module configured for, in response to receiving a request of creating GPU services, creating the corresponding GPU services according to the request, creating GPU Pods of a corresponding quantity according to the GPU services, and associating the GPU services with the GPU Pods;
a second associating module configured for creating Kubernetes Pods according to a configuration of the GPU Pods, and associating the Kubernetes Pods with the GPU Pods;
a calculating module configured for, in response to receiving a calculating request, according to the calculating request, determining a specification of a GPU graphic memory or GPU time slice required to be applied for, and comparing with a threshold specified by the GPU services;
a first determining module configured for, in response to the specification of the GPU graphic memory or GPU time slice being less than the threshold specified by the GPU services, reading current residual resource amounts of the GPU Pods and the Kubernetes Pods, and comparing with the specification of the GPU graphic memory or GPU time slice; and
a second determining module configured for, in response to the specification of the GPU graphic memory or GPU time slice being less than a sum of the current residual resource amounts of the GPU Pods and the Kubernetes Pods, according to a current resource utilization rate, dispatching the GPU Pods and the Kubernetes Pods for calculation.

Yet another aspect of the embodiments of the present application provides a computer device, wherein the computer device includes:
at least one processor; and
a memory, wherein the memory stores a computer instruction that is executable in the processor, and the instruction, when executed by the processor, implements the operations of the method stated above.

Still another aspect of the embodiments of the present application further provides a computer-readable storage medium, wherein the computer-readable storage medium stores a computer program that, when executed by a processor, implements the operations of the method stated above.

The present application has the following advantageous technical effect. The present application uses the functions of Kubernetes such as customized resource and customized annotation to realize the registration and dispatching of virtual services, and realizes restriction on the application for the GPU graphic memory and the controlling on the occupation of the GPU time slice by means of CUDA hijack, thereby reasonably allocating the resource according to the calculating requests.

### BRIEF DESCRIPTION OF THE DRAWINGS

In order to more clearly illustrate the technical solutions of the embodiments of the present application or the prior art, the figures that are required to describe the embodiments or the prior art will be briefly described below. Apparently, the figures that are described below are merely embodiments of the present application, and a person skilled in the art can obtain other embodiments according to these figures without paying creative work.
FIG. 1 is a schematic diagram of an embodiment of a method for sharing a same GPU by a plurality of services according to the present application;
FIG. 2 is a flow chart of an embodiment of a method for sharing a same GPU by a plurality of services according to the present application;
FIG. 3 is a schematic structural diagram of the hardware of an embodiment of a method for sharing a same GPU by a plurality of services according to the present application; and
FIG. 4 is a schematic diagram of an embodiment of a computer storage medium for sharing a same GPU by a plurality of services according to the present application.

### DETAILED DESCRIPTION

In order to make the objects, the technical solutions and the advantages of the present application clearer, the embodiments of the present application will be further described in detail with reference to the embodiments and the drawings.

It should be noted that all of the expressions using "first" and "second" in the embodiments of the present application are intended to distinguish two different entities or different parameters that have the same names. It can be seen that "first" and "second" are merely for the convenience of the expression, and should not be construed as a limitation on the embodiments of the present application, which will not be explained in detail in the subsequent embodiments.

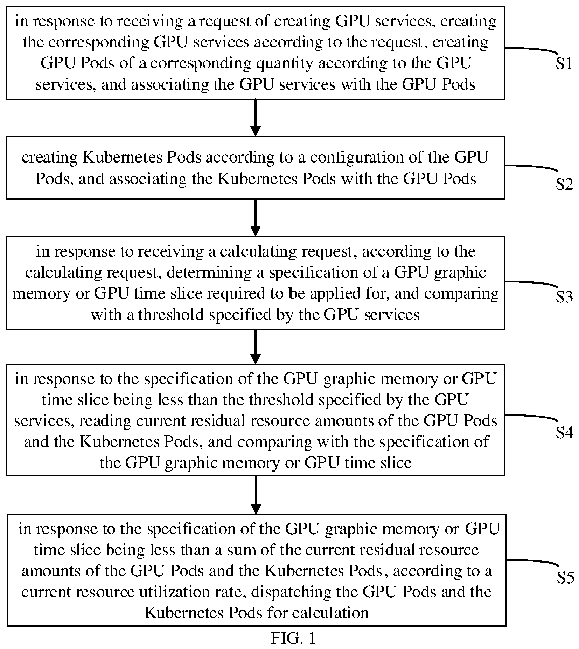

In order to achieve the above object, the first aspect of the embodiments of the present application provides an embodiment of a method for sharing a same GPU by a plurality of services. FIG. 1 shows a schematic diagram of an embodiment of a method for sharing a same GPU by a plurality of services according to the present application. As shown in FIG. 1, the embodiment of the present application includes the following steps:
S1: in response to receiving a request of creating GPU services, creating the corresponding GPU services according to the request, creating GPU Pods of a corresponding quantity according to the GPU services, and associating the GPU services with the GPU Pods;
S2: creating Kubernetes Pods according to a configuration of the GPU Pods, and associating the Kubernetes Pods with the GPU Pods;
S3: in response to receiving a calculating request, according to the calculating request, determining a specification of a GPU graphic memory or GPU time slice required to be applied for, and comparing with a threshold specified by the GPU services;
S4: in response to the specification of the GPU graphic memory or GPU time slice being less than the threshold specified by the GPU services, reading current residual resource amounts of the GPU Pods and the Kubernetes Pods, and comparing with the specification of the GPU graphic memory or GPU time slice; and
S5: in response to the specification of the GPU graphic memory or GPU time slice being less than a sum of the current residual resource amounts of the GPU Pods and the Kubernetes Pods, according to a current resource utilization rate, dispatching the GPU Pods and the Kubernetes Pods for calculation.

A GPU-service controller, a GPU-Pod dispatcher and a GPU-Pod controller are deployed in a host node of a Kubernetes cluster . The GPU-service controller serves for creating the GPU Pods, the GPU-Pod dispatcher serves for dispatching the GPU Pods, and the GPU-Pod controller serves for creating the Kubernetes Pods according to the configuration of the GPU Pods. A GPU-node proxy module and GPU services created by the user are deployed in the GPU nodes of the Kubernetes cluster . The GPU-node proxy module serves for, from the GPU services, receiving a request of applying for the GPU graphic memory and a request of applying for the GPU time slice. A GPU-node proxy, according to the resource application quota of the GPU services, calculates whether this request of applying is permitted, when the request of applying is not permitted, then returns a failure to the GPU services, and when the request of applying is permitted, then returns a success to the GPU services. The GPU-service module serves for sending to the GPU-node proxy the request of applying for the GPU graphic memory and the request of applying for the GPU time slice, calculating and returning the result.

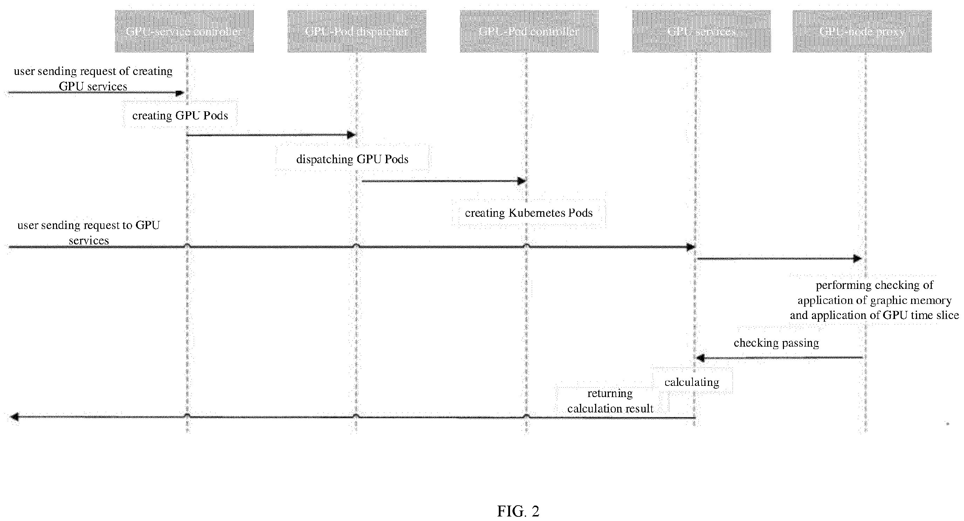

FIG. 2 is a flow chart of an embodiment of a method for sharing a same GPU by a plurality of services according to the present application. As shown in FIG. 2, the user sends a request of creating GPU services to the GPU-service controller, the GPU-service controller creates GPU Pods, and the GPU-Pod dispatcher dispatches the GPU Pods. The GPU-Pod controller creates Kubernetes Pods according to the GPU Pods. The user sends a calculating request to the GPU services, the GPU services send to the GPU-node proxy a checking of the application of the graphic memory and the application of the GPU time slice, and, when the checking passes, the GPU services calculate and return the calculation result to the user.

The method further includes, in response to receiving a request of creating GPU services, creating the corresponding GPU services according to the request, creating GPU Pods of the corresponding quantity according to the GPU services, and associating the GPU services with the GPU Pods. The user initiates a Hyper Text Transfer Protocol (HTTP) request of creating the GPU services, and the Kubernetes create a GPU-service-customized resource. The GPU-service controller creates the GPU Pods when the GPU-service-customized resource is detected, and associates the GPU services with the GPU Pods.

The method further includes creating Kubernetes Pods according to the configuration of the GPU Pods, and associating the Kubernetes Pods with the GPU Pods. The GPU-Pod dispatcher detects the GPU Pods, creates Kubernetes Pods according to the configuration of the GPU Pods, and associates the GPU Pods with the Kubernetes Pods. By now, the GPU services, the GPU Pods and the Kubernetes Pods have been associated together.

The method further includes, in response to receiving a calculating request, according to the calculating request, determining a specification of a GPU graphic memory or GPU time slice required to be applied for. When the user sends a calculating request to the GPU services, the GPU services, according to the calculating request, send a HTTP request to the GPU-node proxy to apply for the GPU graphic memory or the GPU time slice.

The method further includes determining whether the specification of the GPU graphic memory or GPU time slice is less than the threshold specified by the GPU services, and in response to the specification of the GPU graphic memory or GPU time slice being less than the threshold specified by the GPU services, reading current residual resource amounts of the GPU Pods and the Kubernetes Pods.

In some embodiments, the method further includes: in response to the specification of the GPU graphic memory or GPU time slice being not less than the threshold specified by the GPU services, according to the specification of the GPU graphic memory or GPU time slice, generating a new request of creating the GPU services. For example, the threshold specified by the GPU services is 10G, while the specification of the GPU graphic memory or GPU time slice is 20G. Accordingly, it is required to, according to the specification of the GPU graphic memory or GPU time slice, generate a new request of creating the GPU services.

The method further includes determining whether the specification of the GPU graphic memory or GPU time slice is less than the sum of the current residual resource amounts of the GPU Pods and the Kubernetes Pods, and in response to the specification of the GPU graphic memory or GPU time slice being less than a sum of the current residual resource amounts of the GPU Pods and the Kubernetes Pods, according to a current resource utilization rate, dispatching the GPU Pods and the Kubernetes Pods for calculation.

In some embodiments, the step of, according to the current resource utilization rate, dispatching the GPU Pods and the Kubernetes Pods for calculation includes: allocating calculation tasks to each of the GPU Pods and the Kubernetes Pods, so that resource utilization rates of the GPU Pods and the Kubernetes Pods are equal in calculation. For example, the current resource utilization rates of the GPU Pods are 10%, 30% and 50%, and the Kubernetes Pod corresponding to each of the GPU Pods is 60%. Accordingly, the calculation tasks may be allocated to the GPU Pods and the Kubernetes Pods, so that the GPU Pods and the Kubernetes Pods have equal resource utilization rates, which are, for example, 70%.

In some embodiments, the step of, according to the current resource utilization rate, dispatching the GPU Pods and the Kubernetes Pods for calculation includes: sorting the GPU Pods from a highest computing power to a lowest computing power, and allocating calculation tasks to the GPU Pods in order, to, after a resource utilization rate of a current GPU Pod reaches a third threshold, allocate remaining calculation tasks to a next one GPU Pod. For example, the GPU Pods are sorted from the highest computing power to the lowest computing power as GPU Pods 1, GPU Pods2 and GPU Pods3, firstly the calculation tasks are allocated to GPU Pods1, and after the resource utilization rate of GPU Pods1 has reached a third threshold (for example, 80%), the tasks are allocated to GPU Pods2.

In some embodiments, the step of, according to the current resource utilization rate, dispatching the GPU Pods and the Kubernetes Pods for calculation includes: sorting the GPU Pods from a lowest current resource utilization rate to a highest current resource utilization rate, and allocating calculation tasks to the GPU Pods in order, to, after a resource utilization rate of a current GPU Pod reaches a third threshold, allocate remaining calculation tasks to a next one GPU Pod. For example, the GPU Pods are sorted from the lowest current resource utilization rate to the highest current resource utilization rate as GPU Pods2, GPU Pods3 and GPU Pods 1, firstly the calculation tasks are allocated to GPU Pods2, and after the resource utilization rate of GPU Pods2 has reached a third threshold (for example, 80%), the tasks are allocated to GPU Pods3.

In some embodiments, the method further includes: in response to the specification of the GPU graphic memory or GPU time slice being not less than the sum of the current residual resource amounts of the GPU Pods and the Kubernetes Pods, increasing a failure time quantity by one, and, every predetermined duration, determining again whether the specification of the GPU graphic memory or GPU time slice is less than the sum of the current residual resource amounts of the GPU Pods and the Kubernetes Pods.

In some embodiments, the method further includes: determining whether the failure time quantity reaches a second threshold, and in response to the failure time quantity reaching the second threshold, increasing a magnitude of the predetermined duration.

It should be noted that all of the steps according to the embodiments of the method for sharing a same GPU by a plurality of services stated above may be mutually mixed, replaced, added and deleted. Therefore, those reasonable arrangements, combinations and variations of the method for sharing a same GPU by a plurality of services should also fall within the protection scope of the present application, and the protection scope of the present application should not be limited to the embodiments.

In order to achieve the above object, the second aspect of the embodiments of the present application provides a system for sharing a same GPU by a plurality of services, wherein the system includes:
a first associating module configured for, in response to receiving a request of creating GPU services, creating the corresponding GPU services according to the request, creating GPU Pods of a corresponding quantity according to the GPU services, and associating the GPU services with the GPU Pods;
a second associating module configured for creating Kubernetes Pods according to a configuration of the GPU Pods, and associating the Kubernetes Pods with the GPU Pods;
a calculating module configured for, in response to receiving a calculating request, according to the calculating request, determining a specification of a GPU graphic memory or GPU time slice required to be applied for, and comparing with a threshold specified by the GPU services;
a first determining module configured for, in response to the specification of the GPU graphic memory or GPU time slice being less than the threshold specified by the GPU services, reading current residual resource amounts of the GPU Pods and the Kubernetes Pods, and comparing with the specification of the GPU graphic memory or GPU time slice; and
a second determining module configured for, in response to the specification of the GPU graphic memory or GPU time slice being less than a sum of the current residual resource amounts of the GPU Pods and the Kubernetes Pods, according to a current resource utilization rate, dispatching the GPU Pods and the Kubernetes Pods for calculation.

In some embodiments, the system further includes a creating module configured for:
in response to the specification of the GPU graphic memory or time slice being not less than the threshold specified by the GPU services, according to the specification of the GPU graphic memory or time slice, generating a new request of creating GPU services.

In some embodiments, the system further includes a detecting module configured for:
in response to the specification of the GPU graphic memory or time slice being not less than the sum of the current residual resource amounts of the GPU Pods and the Kubernetes Pods, increasing a failure time quantity by one, and, every predetermined duration, determining again whether the specification of the GPU graphic memory or time slice is less than the sum of the current residual resource amounts of the GPU Pods and the Kubernetes Pods.

In some embodiments, the system further includes a third determining module configured for:
determining whether the failure time quantity reaches a second threshold, and in response to the failure time quantity reaching the second threshold, increasing a magnitude of the predetermined duration.

In some embodiments, the second determining module is configured for:
allocating calculation tasks to each of the GPU Pods and the Kubernetes Pods, so that resource utilization rates of the GPU Pods and the Kubernetes Pods are equal in calculation.

In some embodiments, the second determining module is configured for:
sorting the GPU Pods from a highest computing power to a lowest computing power, and allocating calculation tasks to the GPU Pods in order, to, after a resource utilization rate of a current GPU Pod reaches a third threshold, allocate remaining calculation tasks to a next one GPU Pod.

In some embodiments, the second determining module is configured for:
sorting the GPU Pods from a lowest current resource utilization rate to a highest current resource utilization rate, and allocating calculation tasks to the GPU Pods in order, to, after a resource utilization rate of a current GPU Pod reaches a third threshold, allocate remaining calculation tasks to a next one GPU Pod.

In order to achieve the above object, the third aspect of the embodiments of the present application provides a computer device, wherein the computer device includes:
at least one processor; and
a memory, wherein the memory stores a computer instruction that is executable in the processor, and the instruction, when executed by the processor, implements the following operations:
   S1: in response to receiving a request of creating GPU services, creating the corresponding GPU services according to the request, creating GPU Pods of a corresponding quantity according to the GPU services, and associating the GPU services with the GPU Pods;
   S2: creating Kubernetes Pods according to a configuration of the GPU Pods, and associating the Kubernetes Pods with the GPU Pods;
   S3: in response to receiving a calculating request, according to the calculating request, determining a specification of a GPU graphic memory or GPU time slice required to be applied for, and comparing with a threshold specified by the GPU services;
   S4: in response to the specification of the GPU graphic memory or GPU time slice being less than the threshold specified by the GPU services, reading current residual resource amounts of the GPU Pods and the Kubernetes Pods, and comparing with the specification of the GPU graphic memory or GPU time slice; and
   S5: in response to the specification of the GPU graphic memory or GPU time slice being less than a sum of the current residual resource amounts of the GPU Pods and the Kubernetes Pods, according to a current resource utilization rate, dispatching the GPU Pods and the Kubernetes Pods for calculation.

In some embodiments, the operations further include:
in response to the specification of the GPU graphic memory or time slice being not less than the threshold specified by the GPU services, according to the specification of the GPU graphic memory or time slice, generating a new request of creating GPU services.

In some embodiments, the operations further include:
in response to the specification of the GPU graphic memory or time slice being not less than the sum of the current residual resource amounts of the GPU Pods and the Kubernetes Pods, increasing a failure time quantity by one, and, every predetermined duration, determining again whether the specification of the GPU graphic memory or time slice is less than the sum of the current residual resource amounts of the GPU Pods and the Kubernetes Pods.

In some embodiments, the operations further include:
determining whether the failure time quantity reaches a second threshold, and in response to the failure time quantity reaching the second threshold, increasing a magnitude of the predetermined duration.

In some embodiments, the operation of, according to the current resource utilization rate, dispatching the GPU Pods and the Kubernetes Pods for calculation includes:
allocating calculation tasks to each of the GPU Pods and the Kubernetes Pods, so that the GPU Pods and the Kubernetes Pods have equal resource utilization rates in calculation.

In some embodiments, the operation of, according to the current resource utilization rate, dispatching the GPU Pods and the Kubernetes Pods for calculation includes:
sorting the GPU Pods from a highest computing power to a lowest computing power, and allocating calculation tasks to the GPU Pods in order, to, after a resource utilization rate of a current GPU Pod reaches a third threshold, allocate remaining calculation tasks to a next one GPU Pod.

In some embodiments, the operation of, according to the current resource utilization rate, dispatching the GPU Pods and the Kubernetes Pods for calculation includes:
sorting the GPU Pods from a lowest current resource utilization rate to a highest current resource utilization rate, and allocating calculation tasks to the GPU Pods in order, to, after a resource utilization rate of a current GPU Pod reaches a third threshold, allocate remaining calculation tasks to a next one GPU Pod.

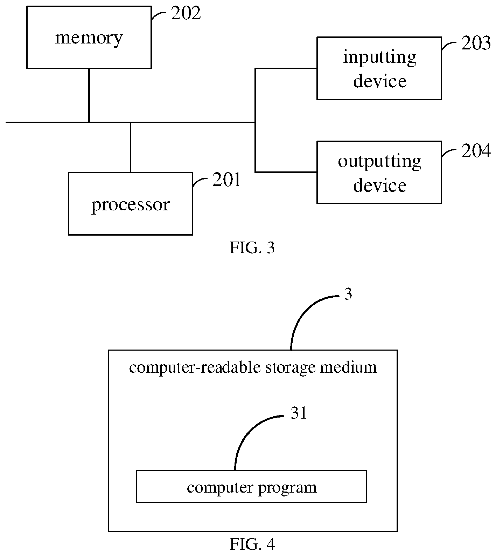

As shown in FIG. 3, FIG. 3 is a schematic structural diagram of the hardware of an embodiment of a method for sharing a same GPU by a plurality of services according to the present application.

Taking the device shown in FIG. 3 as an example, the device includes a processor 201 and a memory 202, and may further include an inputting device 203 and an outputting device 204.

The processor 201, the memory 202, the inputting device 203 and the outputting device 204 may be connected by a bus or in another manner, and FIG. 3 illustrates by taking connection by a bus as an example.

The memory 202, as a non-volatile computer-readable storage medium, may be used to store a non-volatile software program, a non-volatile computer-executable program and a module, for example, the program instruction/module corresponding to the method for sharing a same GPU by a plurality of services according to the embodiments of the present application. The processor 201, by executing the non-volatile software program, instruction and module stored in the memory 202, executes the various functional applications and data processing of the server, i.e., implementing the method for sharing a same GPU by a plurality of services according to the above process embodiments.

The memory 202 may include a program storing region and a data storing region. The program storing region may store application programs required by the operating system and at least one function. The data storing region may store the data, and so on, created by the usage of the method for sharing a same GPU by a plurality of services. Furthermore, the memory 202 may include a high-speed random access memory, and may also include a non-volatile memory, for example, at least one magnetic-disk storage device, flash-memory device or another non-volatile solid-state memory device. In some embodiments, the memory 202 may be a memory provided remotely to the processor 201, and the remote memory may be connected to a local module via a network. Examples of the network include but are not limited to the Internet, an enterprise intranet, a local area network, a mobile communication net and a combination thereof.

The inputting device 203 may receive information such as the inputted user name and password. The outputting device 204 may include a displaying device such as a display screen.

One or more program instructions/modules corresponding to the method for sharing a same GPU by a plurality of services are stored in the memory 202, and, when executed by the processor 201, implement the method for sharing a same GPU by a plurality of services according to any of the above process embodiments.

Any one of the embodiments of the computer device that implements the method for sharing a same GPU by a plurality of services stated above can reach an effect the same as or similar to those of any of the above-described process embodiments corresponding thereto.

The present application further provides a computer-readable storage medium, wherein the computer-readable storage medium stores a computer program that, when executed by a processor, implements the method stated above.

As shown in FIG. 4, FIG. 4 is a schematic diagram of an embodiment of a computer storage medium for sharing a same GPU by a plurality of services according to the present application. Taking the computer storage medium shown in FIG. 4 as an example, the computer-readable storage medium 3 stores a computer program 31 that, when executed by a processor, implements the above method.

Finally, it should be noted that a person skilled in the art can understand that all or some of the processes of the methods according to the above embodiments may be implemented by relative hardware according to an instruction from a computer program, the program of the method for sharing a same GPU by a plurality of services may be stored in a computer-readable storage medium, and the program, when executed, may contain the processes of the embodiments of the method stated above. The storage medium of the program may be a diskette, an optical disk, a Read-Only Memory (ROM), a Random Access Memory (RAM) and so on. The embodiments of the computer program can reach an effect the same as or similar to those of any of the above-described process embodiments corresponding thereto.

The illustrative embodiments disclosed by the present application are described above. However, it should be noted that many variations and modifications may be made without departing from the scope of the embodiments of the present application defined by the claims. The functions, steps and/or acts of the process claims according to the disclosed embodiments described herein are not required to be implemented in any specific sequence. Furthermore, although the elements of the embodiments of the present application may be described or claimed in a singular form, unless explicitly limited as singular, they may also be comprehended as plural.

It should be understood that, as used herein, unless the context clearly supports an exception, the singular form "a" is intended to encompass a plural form. It should also be understood that, as used herein, the "and/or" refers to including any and all feasible combinations of one or more relatively listed items.

The serial numbers of the embodiments of the present application are merely for the purpose of description, and do not indicate the relative preferences of the embodiments.

A person skilled in the art can understand that all or some of the steps for implementing the above embodiments may be completed by hardware, and may also be completed by using a program to instruct relevant hardware. The program may be stored in a computer-readable storage medium. The above-mentioned storage medium may be a read-only memory, a magnetic disk, an optical disk and so on.

A person skilled in the art should understand that the discussion on any of the above embodiments is merely illustrative, and are not intended to imply that the scope of the embodiments of the present application is limited to those examples. With the concept of the embodiments of the present application, the embodiments or the technical features of different embodiments may be combined, and many other variations of different aspects of the embodiments of the present application as stated above may exist, which are not provided in detail for brevity. Therefore, any omissions, modifications, equivalent substitutions and improvements that are made within the spirit and the principle of the embodiments of the present application should fall within the protection scope of the embodiments of the present application.

## Claims

1. A method for sharing a same GPU by a plurality of services, **characterized in that**, the method comprises:
in response to receiving a request of creating GPU services, creating the corresponding GPU services according to the request, creating GPU Pods of a corresponding quantity according to the GPU services, and associating the GPU services with the GPU Pods;
creating Kubernetes Pods according to a configuration of the GPU Pods, and associating the Kubernetes Pods with the GPU Pods;
in response to receiving a calculating request, according to the calculating request, determining a specification of a GPU graphic memory or GPU time slice required to be applied for, and comparing with a threshold specified by the GPU services;
in response to the specification of the GPU graphic memory or GPU time slice being less than the threshold specified by the GPU services, reading current residual resource amounts of the GPU Pods and the Kubernetes Pods, and comparing with the specification of the GPU graphic memory or GPU time slice; and
in response to the specification of the GPU graphic memory or GPU time slice being less than a sum of the current residual resource amounts of the GPU Pods and the Kubernetes Pods, according to a current resource utilization rate, dispatching the GPU Pods and the Kubernetes Pods for calculation.

2. The method according to claim 1, **characterized in that**, the method further comprises:
in response to the specification of the GPU graphic memory or GPU time slice being not less than the threshold specified by the GPU services, according to the specification of the GPU graphic memory or GPU time slice, generating a new request of creating the GPU services.

3. The method according to claim 1, **characterized in that**, the method further comprises:
in response to the specification of the GPU graphic memory or GPU time slice being not less than the sum of the current residual resource amounts of the GPU Pods and the Kubernetes Pods, increasing a failure time quantity by one, and, every predetermined duration, determining again whether the specification of the GPU graphic memory or GPU time slice is less than the sum of the current residual resource amounts of the GPU Pods and the Kubernetes Pods.

4. The method according to claim 3, **characterized in that**, the method further comprises:
determining whether the failure time quantity reaches a second threshold, and in response to the failure time quantity reaching the second threshold, increasing a magnitude of the predetermined duration.

5. The method according to claim 1, **characterized in that**, according to the current resource utilization rate, dispatching the GPU Pods and the Kubernetes Pods for calculation comprises:
allocating calculation tasks to each of the GPU Pods and the Kubernetes Pods, so that resource utilization rates of the GPU Pods and the Kubernetes Pods are equal in calculation.

6. The method according to claim 1, **characterized in that**, according to the current resource utilization rate, dispatching the GPU Pods and the Kubernetes Pods for calculation comprises:
sorting the GPU Pods from a highest computing power to a lowest computing power, and allocating calculation tasks to the GPU Pods in order, to, after a resource utilization rate of a current GPU Pod reaches a third threshold, allocate remaining calculation tasks to a next one GPU Pod.

7. The method according to claim 1, **characterized in that**, according to the current resource utilization rate, dispatching the GPU Pods and the Kubernetes Pods for calculation comprises:
sorting the GPU Pods from a lowest current resource utilization rate to a highest current resource utilization rate, and allocating calculation tasks to the GPU Pods in order, to, after a resource utilization rate of a current GPU Pod reaches a third threshold, allocate remaining calculation tasks to a next one GPU Pod.

8. A system for sharing a same GPU by a plurality of services, **characterized in that**, the system comprises:
a first associating module configured for, in response to receiving a request of creating GPU services, creating the corresponding GPU services according to the request, creating GPU Pods of a corresponding quantity according to the GPU services, and associating the GPU services with the GPU Pods;
a second associating module configured for creating Kubernetes Pods according to a configuration of the GPU Pods, and associating the Kubernetes Pods with the GPU Pods;
a calculating module configured for, in response to receiving a calculating request, according to the calculating request, determining a specification of a GPU graphic memory or GPU time slice required to be applied for, and comparing with a threshold specified by the GPU services;
a first determining module configured for, in response to the specification of the GPU graphic memory or GPU time slice being less than the threshold specified by the GPU services, reading current residual resource amounts of the GPU Pods and the Kubernetes Pods, and comparing with the specification of the GPU graphic memory or GPU time slice; and
a second determining module configured for, in response to the specification of the GPU graphic memory or GPU time slice being less than a sum of the current residual resource amounts of the GPU Pods and the Kubernetes Pods, according to a current resource utilization rate, dispatching the GPU Pods and the Kubernetes Pods for calculation.

9. A computer device, **characterized in that**, the computer device comprises:
at least one processor; and
a memory, wherein the memory stores a computer instruction that is executable in the processor, and the instruction, when executed by the processor, implements the operations of the method according to any one of claims 1-7.

10. A computer-readable storage medium, the computer-readable storage medium storing a computer program, **characterized in that**, the computer program, when executed by a processor, implements the operations of the method according to any one of claims 1-7.
